# EUROPEAN PATENT SPECIFICATION

(11) **EP 4 332 421 B1**
(45) Date of publication and mention of the grant of the patent: **25.06.2025**
(21) Application number: 22192617.3
(22) Date of filing: 29.08.2022
(51) Int. Cl.: F16L 37/00, F28F 1/02, F28F 9/02

(54) **A BATTERY COOLER**
BATTERIEKÜHLER
REFROIDISSEUR DE BATTERIE

(43) Date of publication of application: 06.03.2024
(73) Proprietor: VALEO SYSTEMES THERMIQUES, 78320 Le Mesnil Saint-Denis (FR)
(72) Inventor: BILEK, Petr, 267 53 Zebrak (CZ); ZAPOTOCKY, Jakub, 267 53 Zebrak (CZ); ZABRANSKY, Petr, 267 53 Zebrak (CZ); HRADSKY, Radek, 267 53 Zebrak (CZ)
(74) Representative: Valeo Systèmes Thermiques

(56) References cited:
- EP-A1- 3 885 689
- EP-A1- 3 968 440
- WO-A1-2018/150279
- FR-A1- 3 077 128
- US-A1- 2021 249 711
- US-A1- 2022 065 555

## Description

### TECHNICAL FIELD

The present invention relates to a heat exchanger, particularly, the present invention relates to a tank assembly of a battery cooler for use in an electric vehicle. US 2022/065555 discloses a battery cooler having the features of the preamble of claim 1.

### BACKGROUND

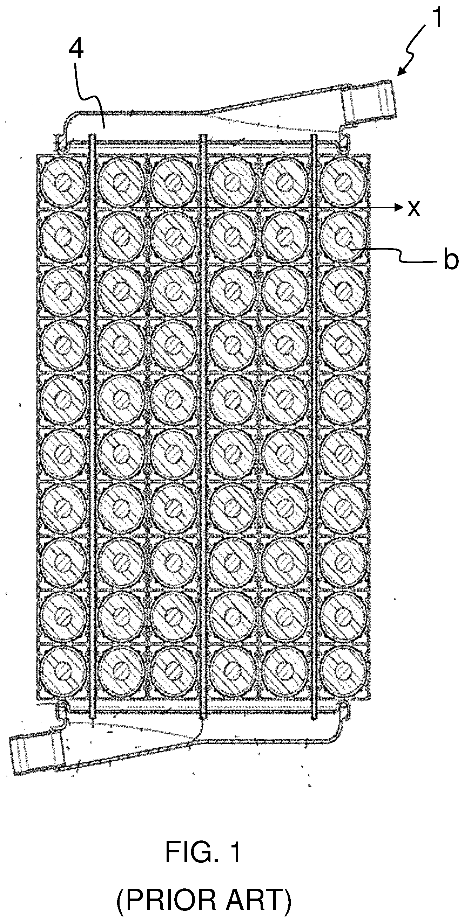

FIG.1 illustrates a conventional battery cooler 1. The conventional battery cooler 1 includes multiple microchannel tubes 2 of aluminum formed by extrusion. Each microchannel tube 2 includes multiple channels 2a. For example, the conventional battery cooler as disclosed in US2021135305A1 includes tubes 2 that are disposed adjacent to one another along a first direction x in spaced apart configuration to define battery-accommodating space that receives battery "b" to be cooled. The microchannel tube or tube 2 is connected to a header that forms a part of the tank 4 by brazing, such configuration configures fluid communication between the metallic tank 4 and the tubes 2. However, the brazing of the microchannel tube 2 to the tank 4 is a problem. The inherent heating of the microchannel tube or tube 2 during the brazing process, is detrimental to the mechanical properties, particularly, the mechanical resistance of the microchannel tubes 2. Furthermore, the microchannel tube 2 is un-necessarily heated in the brazing furnace wherein only the ends of the microchannel tube is required to be subjected to heating for brazing and securely connecting the ends of the microchannel tube 2 to the tank 4. There are further disadvantages of subjecting the entire microchannel tube 2 to brazing in brazing furnace, for example, there is wastage of energy and need for larger brazing furnaces when the entire microchannel tubes 2 are subjected to the brazing in the brazing furnace. Further, the brazing process involves other problems such as CO₂ emissions that renders the working environment hazardous for workers and causes harm to the environment. Further, brazing requires furnaces, jigs and fixtures and is uneconomical. Further, as brazing connection necessitates the components to be joined to be metallic and involves fused metal deposits, thereby increasing the overall weight of the components. Accordingly, brazing connection is particularly undesirable in case of components assembled in vehicle as increase in overall weight of the vehicle reduces overall fuel economy of the vehicle. The microchannel tubes 2 is coated with powder coating of thermally conductive but electrically insulated material, except at the end portions thereof to avoid clogging of the channels 2a. The coating of thermally conductive but electrically insulated material permits heat transfer from the batteries to the coolant flowing through the microchannel tubes while sill prevent electric current from flowing from the batteries to the coolant through the microchannel tubes. However, irregular surfaces that are inherently formed at the interface between portions of the microchannel tube that are powder coated and that are not cause problems such as brazing defects.

Most of the prior art suggests brazing connection between the microchannel tubes 2 and the tank 4. Although, few of the prior art suggest mechanical connections between the microchannel tubes 2 and the tank 4 to avoid brazing for forming secure connection between the microchannel tubes 2 and the tank 4. However, such mechanical connections are not efficient and causes leakage of the coolant from the battery cooler 1, the leakage issues may further lead to inefficient operation of the battery cooler 1.

Accordingly, there is a need for battery cooler that prevents brazing for configuring connection between the microchannel tubes and the tank, thereby obviating drawbacks associated with the brazing such as for example, unnecessary heating of the entire microchannel tubes, energy losses, increase in overall weight of the battery cooler and air pollution caused by brazing. Further, there is a need for a battery cooler that utilizes over-molding and mechanical connections for configure secure and leak proof connection between the microchannel tubes and the tank.

### OBJECTS

An object of the present invention is to provide a battery cooler that prevents brazing for configuring connection between the microchannel tubes and the tank, thereby preventing the drawbacks associated with the brazing for configuring the connection.

Yet another object of the present invention is to provide a battery cooler that utilizes over-molding and mechanical connections for configuring secure and leak proof connection between the microchannel tubes and the tank.

Still another object of the present invention is to provide a battery cooler that maintains efficiency and performance of the battery cooler by preventing leakage of coolant.

Yet another object of the present invention is to provide a battery cooler that is comparatively lighter in weight compared to conventional battery coolers that involves brazing for forming connection between tank and microchannel tubes.

Still another object of the present invention is to provide a battery cooler that is environment friendly and involves comparatively less carbon footprint compared to conventional battery coolers that involves brazing for forming connection between tank and microchannel tubes.

In the present description, some elements or parameters may be indexed, such as a first element and a second element. In this case, unless stated otherwise, this indexation is only meant to differentiate and name elements which are similar but not identical. No idea of priority should be inferred from such indexation, as these terms may be switched without betraying the invention. Additionally, this indexation does not imply any order in mounting or use of the elements of the invention.

### SUMMARY

A battery cooler is disclosed in accordance with an embodiment of the present invention. The battery cooler includes at least one microchannel tube, a tank holder, a tank and a sealing gasket. The microchannel tube includes respective multiple channels and is formed by extrusion. The tank holder is secured to the microchannel tube. The tank is securely mounted over the tank holder. The sealing gasket is secured to at least one of the microchannel tube and the tank holder. The tank holder is over-molded over extreme ends of the microchannel tube and the tank is secured to the tank-holder by mechanical connections.

Generally, the microchannel tubes follows a wavy profile along length thereof, crests formed on microchannel tubes disposed adjacent to one another along a first direction orthogonal to the plane of the microchannel tubes are aligned and disposed opposite to one another define battery accommodating space to receive battery to be cooled.

Particularly, at least a portion of the periphery of extreme ends of the microchannel tube is formed with retainer elements, for example, corrugations, teeth etc. to ensure gripping of the microchannel tube by the tank-holder over-molded over the microchannel tube.

According to the invention, the microchannel tubes disposed adjacent to each other in a second direction Z along the plane thereof are separated by a connection portion formed with at least one opening to facilitate over-molding of the tank-holder over the corresponding microchannel tube.

In accordance with another embodiment, the battery cooler includes a single microchannel tube disposed along the second direction Z. The microchannel tube is formed with at least one separating means such as a filled channel and a connecting portion to define separate fluid flow passes for U-flow through the channels. At least one of the filled channel and the connecting portion is configured with at least one opening to facilitate over-molding of the tank holder over the corresponding microchannel tube.

Specifically, the tank includes at least one peripheral wall, an inlet, an outlet and a connecting opening. The peripheral wall defines an enclosure. The inlet and the outlet is for ingress and egress of a fluid with respect to the enclosure. The connecting opening is defined by the peripheral wall, receives and holds at least one corresponding microchannel tube to configure fluid communication between the enclosure and the microchannel tube.

Also, the tank includes either one of an internal baffle and recesses to divide an interior of the tank into a first tank portion and a second tank portion separate from the first portion.

Generally, the sealing gasket is secured to the extreme end of the at least one of microchannel tube by at least one of press-fitting and over-molding.

Particularly, the sealing gasket is of resilient material, for example, Ethylene Propylene Diene Monomer (EPDM) material and is compressed as the tank is securely mounted on the tank holder.

Generally, at least one of the tank holder and the sealing gasket is disposed between the microchannel tube and the tank.

Particularly, at least one of the tank holder and the sealing gasket is coaxially received with respect to the microchannel tubes.

In accordance with an embodiment of the present invention, the tank holder includes a groove formed thereon to receive and securely hold the sealing gasket therein.

Generally, the mechanical connections include complementary snap engagement elements formed on the tank holder and the tank respectively.

Particularly, the tank includes a plurality of latching element formed along the length thereof and that is received in and engages with corresponding loops formed on the tank holder to securely mount the tank to the tank holder.

More specifically, at least one of the microchannel tubes is coated with powder coating of thermally conductive and electrically insulated material, except at the end portions thereof.

Further, the tank holder covers the interface between portions of the microchannel tube without the powder coating and with the powder coating respectively.

Also, the peripheral wall extends beyond the connecting opening to cover the extreme ends of the microchannel tubes.

Also is disclosed a method for assembling a battery cooler in accordance with an embodiment of the present invention. The method includes the step of powder coating at least a portion of at least one microchannel tube with thermally conductive and electrically insulated material. Thereafter the method involves the step of over-molding a tank holder over at least one extreme end of a microchannel tube such that the tank holder covers interface between portions of microchannel tube without coating and with coating respectively. Thereafter, the method includes the step of step of securely mounting a sealing gasket over at least one of tank holder and the microchannel tube. Finally, the method includes the step of securely mounting a tank over the corresponding tank holder.

### BRIEF DESCRIPTION

Other characteristics, details and advantages of the invention can be inferred from the description of the invention hereunder. A more complete appreciation of the invention and many of the attendant advantages thereof will be readily obtained as the same becomes better understood by reference to the following detailed description when considered in connection with the accompanying figures, wherein:
FIG.1 illustrates an isometric view of at least a portion of a conventional battery cooler depicting a microchannel tube connected to a tank portion by mechanical connections;
FIG. 2 illustrates a side view of at least a portion of a battery cooler in accordance with an embodiment of the present invention, wherein batteries to be cooled are depicted disposed between adjacent microchannel tubes of the battery cooler;
FIG.3 illustrates isometric view of a microchannel tube-tank assembly of the battery cooler of FIG. 2;
FIG.4 illustrates an exploded view of the microchannel tube-tank assembly of FIG. 3;
FIG.5 illustrates an isometric view of a pair of spaced apart microchannel tubes with a connection portion connecting the microchannel tubes.
FIG. 6 illustrates an isometric view of the microchannel tube-tank assembly of FIG.3 without a tank depicting internal details such as a tank holder and a sealing gasket secured to one end of a microchannel tubes;
FIG. 7 illustrates an isometric view of the tank of the microchannel tube-tank assembly of FIG. 4 formed with latching elements extending therefrom and engaging with complementary loops and /or cavities formed on a tank holder;
FIG. 8 illustrates a sectional view of the tank of FIG. 7 depicting the internal details of the tank;
FIG. 9 illustrates an isometric view of the tank holder of FIG. 6 formed by over-molding;
FIG. 10 illustrates an isometric view of a sealing gasket;
FIG. 11 illustrates a block diagram depicting the various steps of a method for assembling the battery cooler.

Although the present invention is explained in the forthcoming description and accompanying drawings with an example of a battery cooler, wherein the battery cooler includes at least one microchannel tube, a tank holder, a tank and a sealing gasket. The microchannel tube includes respective multiple channels and is formed by extrusion. The tank holder is secured to the microchannel tube and the tank is securely mounted over the tank holder. Particularly, the tank holder is over-molded over extreme ends of the microchannel tube and the tank is secured to the tank-holder by mechanical connections. However, the present invention is applicable for any heat exchanger for use in vehicular and non-vehicular environments, wherein it is required to configure a secure and leak-proof connection between the tank and the micro-channel tubes without brazing, thereby preventing the drawbacks associated with brazing process for configuring connection between the tank and the microchannel tubes.

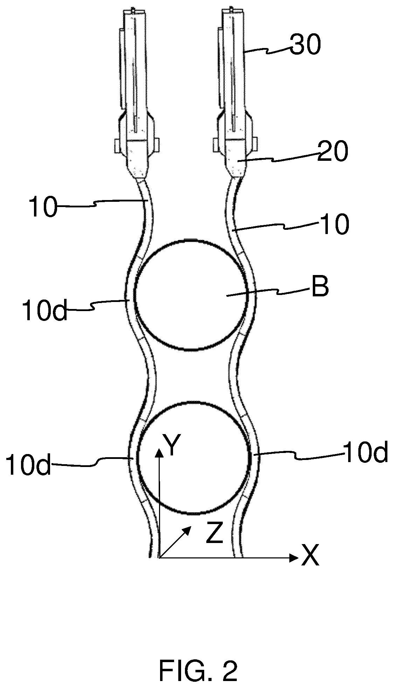

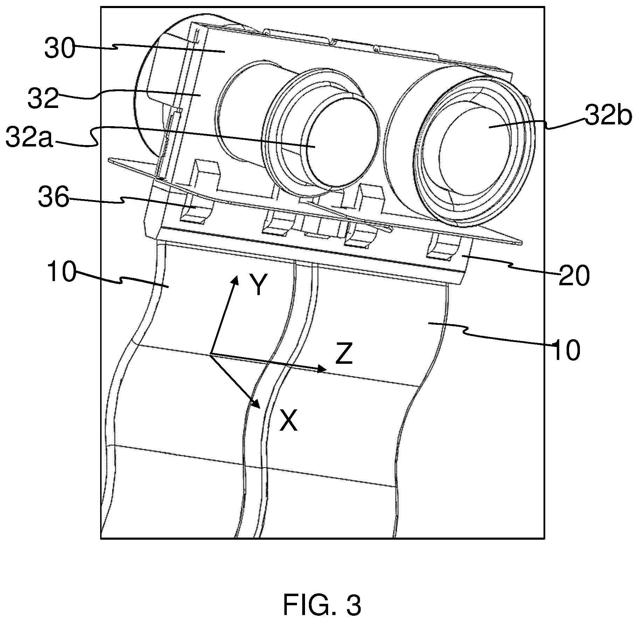

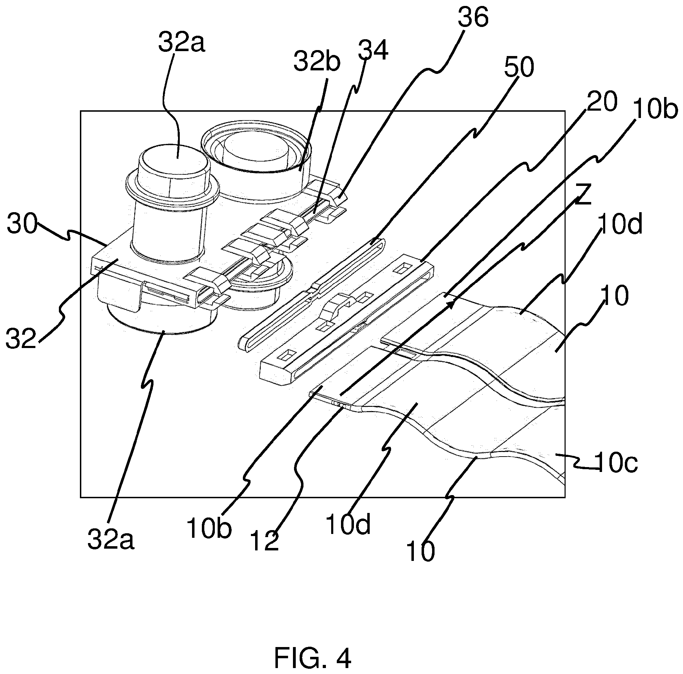

The present disclosure envisages a battery cooler 100 as illustrated in FIG. 2. Particularly, FIF. 2 illustrates a side view of at least a portion of the battery cooler 100, wherein batteries "B" to be cooled are depicted disposed between adjacent microchannel tubes 10 of the battery cooler 100. The battery cooler 100 generally includes at least one microchannel tube-tank assembly. FIG. 3 illustrates isometric view of a microchannel tube-tank assembly. FIG.4 illustrates an exploded view of the microchannel tube-tank assembly. Particularly, the battery cooler 100 includes at least one microchannel tube 10, a tank holder 20, a tank 30 and a sealing gasket 40.

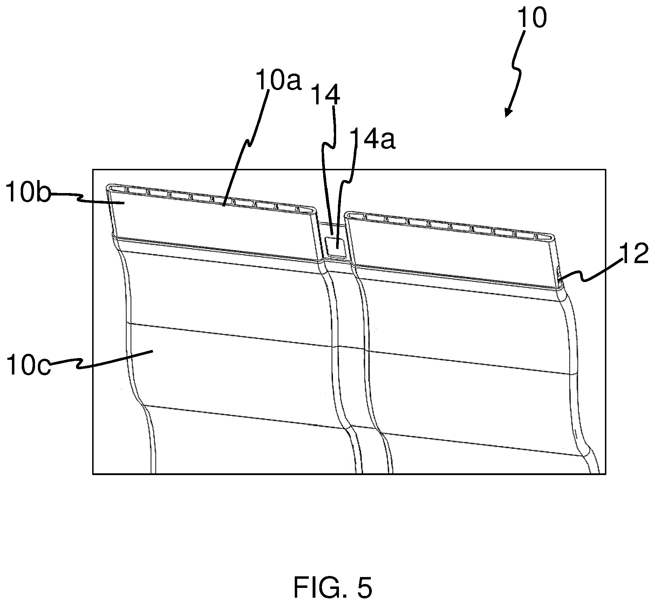

Referring to FIG. 5, each microchannel tube 10 includes multiple channels 10a and is formed by extrusion. In a preferred embodiment, a pair of microchannel tubes 10 are arranged co-planar to each other as illustrated in the FIG. 3 to FIG. 5, wherein one microchannel tube 10 defines a coolant pass and the other microchannel tube 10 define a return pass. Particularly, the pair of microchannel tubes 10 are disposed adjacent and parallel to another pair of microchannel tubes disposed along a first direction X orthogonal to the plane of the microchannel tubes 10 as illustrated in FIG. 2. The pair of microchannel tubes 10 are disposed spaced apart from each other to define battery-accommodating space there between to receive batteries "B" to be cooled by the battery cooler 100. More specifically, each of the microchannel tubes 10 follows a wave profile along length thereof such that crests 10d formed on microchannel tubes 10 disposed adjacent to one another along the first direction X are aligned and disposed opposite to one another to define battery accommodating spaces to receive the batteries "B" to be cooled. The pair of microchannel tubes 10 disposed adjacent to each other in a second direction Z along the plane of the microchannel tubes 10 are connected to and in fluid communication with the tank 30.

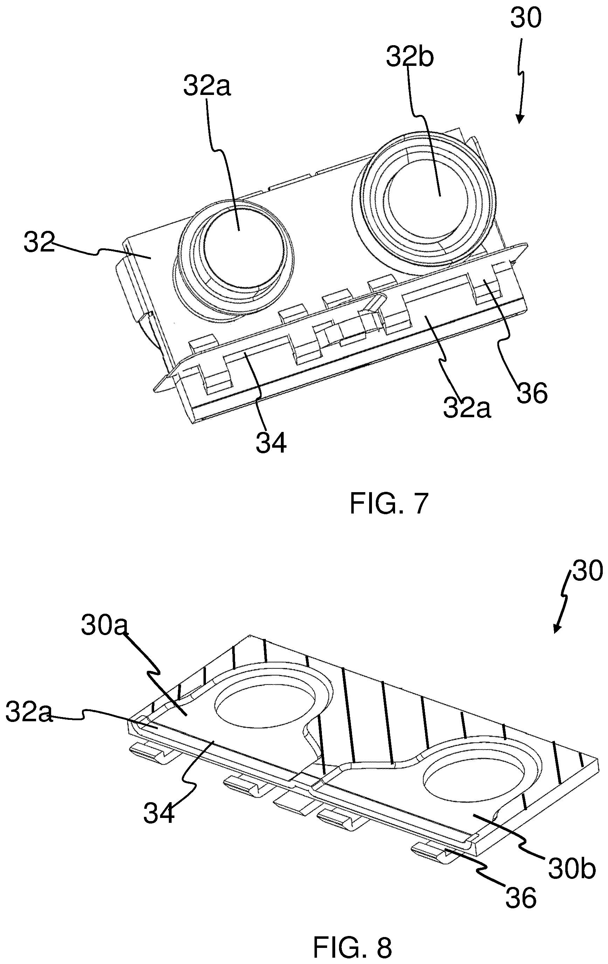

FIG. 7 and 8 illustrates isometric view and section view of the tank 30. The tank 30 is formed of glass reinforced plastic material and holds coolant therein. Such configuration of the tank 30 imparts strength to the tank in order to enable the tank 30 withstand even high pressure fluid, particularly coolant. The tank 30 includes a first portion 30a and a second portion 30b as illustrated in FIG. 8. More specifically, the tank 30 includes either one of an internal baffle and recesses to divide the interior of the tank 30 into the first portion 30a and the second portion 30b that is separate from the first portion 30a. The first portion 30a receiving coolant from an inlet 32a formed on the first portion 30a distributes the coolant to a first microchannel tube 10. The adjacent microchannel tubes 10 disposed along the same plane are connected to and in fluid communication with each other by virtue of an intermediate connecting tank 60 disposed opposite to the tank 30. The intermediate connecting tank 60 forms u-flow between the adjacent microchannel tubes 10 disposed along the same plane. The intermediate connecting tank 60 collects coolant from the first microchannel tube and directs the same to the second microchannel tube, wherein the second microchannel tube 10 defines the return pass of the coolant. The coolant flowing through the first and second microchannel tubes 10 extracts heat from the batteries "B" disposed between the adjacent microchannel tubes 10 disposed parallel to each other along the first direction X. The coolant after extracting heat from the batteries "B" is collected in the second portion 30b of the tank 30 and egresses through an outlet 32b formed on the tank 30, particularly, the second portion 30b.

In accordance with an embodiment, the battery cooler 10 includes a single microchannel tube disposed along the second direction Z. The microchannel tube 10 is formed with at least one of a filled channel and a connecting portion to define separate fluid flow passes for U-flow through the channels. At least one of the filled channel and the connecting portion is configured with at least one opening to facilitate over-molding of the tank holder over the corresponding microchannel tube. Particularly, the microchannel tubes 10 are arranged with each microchannel tube disposed parallel to each other in different planes in a first direction X to define battery accommodating space therebetween to configure the battery cooler. In such arrangement of the microchannel tubes, each microchannel tube configures the u-flow path the coolant flow with itself. Particularly, few channels of at least one of the microchannel tubes 10 disposed parallel to each other define coolant pass and remaining channels of the same microchannel tube 10 define return pass of the coolant. The channels 10a defining the coolant pass and return pass and interconnected by the tank 30 and the intermediate connecting tank 60 and for the sake of brevity of the present document is not explained in details.

In case of the conventional battery cooler, the microchannel tube and the tank formed of metal and connected to each other by brazing face various problems associated with brazing connection between the microchannel tubes and the tank.

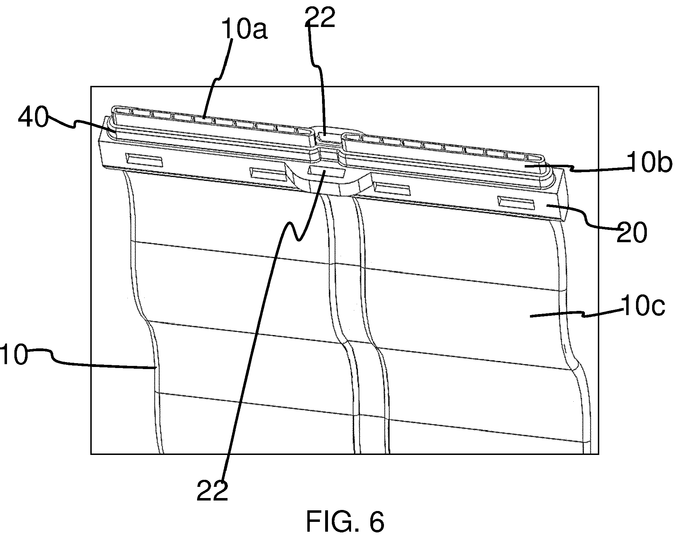

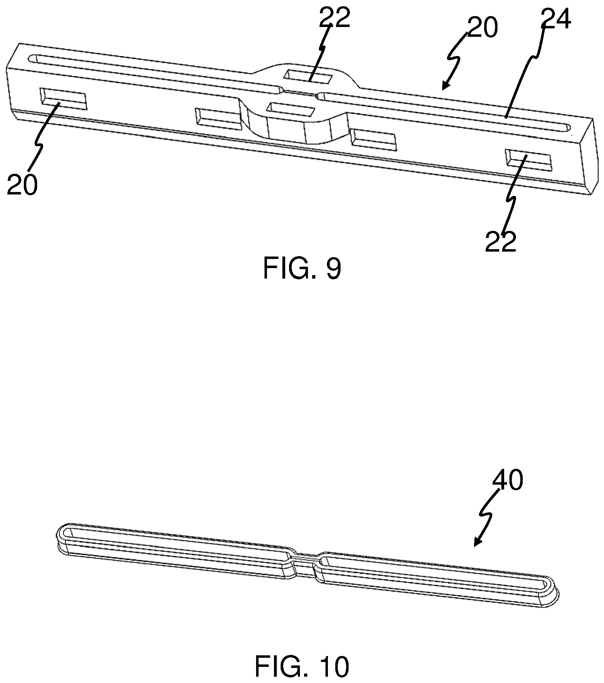

In order to avoid brazing and prevent the problems associated with the brazing process for configuring fluid tight connection between the microchannel tubes and the tank, the battery cooler 100 of the present invention utilizes a combination of over-moulding and mechanical connections for configuring secure connection between the microchannel tube and tank. By preventing brazing connection between the tank and the microchannel tubes, the battery cooler 100 of the present invention is comparatively lighter and manufactured in comparatively convenient, economic and environmentally friendly manner compared to conventional battery coolers that involve brazing connection between the tank and the microchannel tubes. The tank-microchannel assembly in case of the battery cooler 100 of the present invention involves configuring the tank holder 20 as illustrated in FIG. 9 on extreme ends of the microchannel tube 10 and thereafter securing the tank 30 to the tank holder 20. Particularly, the tank holder 20 is securely formed on at least one of the extreme ends of the microchannel tube 10 by over-molding and the tank 30 is securely mounted on the tank holder 20 by using mechanical connections such as for example latching elements 36. FIG. 6 illustrates an isometric view of the microchannel tube-tank assembly without the tank 30 depicting internal details such as the tank holder 20 and the sealing gasket 40 secured to one end of the microchannel tubes by over-molding.

Several provisions are provided to securely form the tank holder 20 at the end portions of the corresponding microchannel tube 10. Particularly, retainer elements are formed for retaining the tank holder 20 on the extreme end of the microchannel tube 10. In accordance with an embodiment, at least a portion of the periphery of extreme ends of the microchannel tube 10 is formed with corrugations 12 to ensure proper gripping connection between the microchannel tube 10 and the tank-holder 20 over-molded over the microchannel tube 10. Generally, the corrugations 12 are horizontal corrugations that are uniformly spaced with respect to each other. Alternatively, the corrugations 12 are vertical corrugations that are uniformly spaced with respect to each other. The corrugations 12 can be uniformly spaced or non-uniformly spaced to receive the fused plastic material forming the over-molding, thereby forming secure connection between end portion of the microchannel 10 and the tank holder 20 over-molded on the microchannel 10. However, the present invention is not limited to any particular configuration, number and placement of the corrugations 12 formed on periphery of extreme ends of the microchannel tube 10 as long as the corrugations 12 ensure proper gripping connection between the microchannel tube 10 and the tank-holder 20 over-molded over the microchannel tube 10.

In case of the battery cooler 100, wherein the microchannel tubes 10 are disposed adjacent to each other in the second direction Z, particularly, the co-planar spaced microchannel tubes separated by a connection portion 14, the connection portion 14 is formed with at least one opening 14a. Generally, the connection portion 14 extends throughout the length of the microchannel tubes 10. Such configuration confers u-flow between the microchannel tubes 10 are disposed adjacent to each other in the second direction Z. In accordance with another embodiment, the connection portion 14 extends along a portion of entire length of the micro-channel tubes 10. Preferably, the connection portion 14 extends end portions of the micro-channels, particularly, along portions 10b of the microchannel tubes 10 without powder coating. The opening 14a facilitate over-molding of the tank-holder 20 over the corresponding microchannel tubes 10. More specifically, the at least one opening 14a is provided at the center of the connection portion 14 and facilitates uniform distribution of the fused plastic material on both sides of the microchannel tubes 10 during the over-molding of the tank holder 20 over the end portions of the micro-channel tubes 10. Such configuration of the at least one opening 14a configures the tank holder 20 on both sides of the microchannel tubes 10, thereby configuring secure connection between the microchannel tubes 10 and the tank 30. However, the present invention is not limited to any particular configuration of the connection portion 14 and configuration, number and placement of the at least one opening 14a formed on the connection portion 14 as far as the at least one opening 14a ensures improved over-molding of the tank holder 20 on both sides of the microchannel tube 10. Improved over-molding of the tank holder 20 over the end portions of the micro-channel tubes 10 leads to secure connection between the end portions of the micro-channel tubes 10 and the tank holders 20. FIG. 9 illustrates an isometric view of the tank holder 20 that is secured to the end portions of the microchannel tube 10 by over-molding. Although, the tank holder 20 is depicted as a separate element, however, the tank holder 20 is securely formed on the end portions of the microchannel tubes by over-molding. The tank holder 20 includes a cavity formed thereon for securing the sealing gasket 40 by over-molding the sealing gasket 40 over the tank holder 20.

Further, the tank 30 is securely mounted over the tank holder 20 by using mechanical connections such as for example, latching elements 36. Generally, the tank 30 includes at least one peripheral wall 32, the inlet 32a, the outlet 32b and a connecting opening 34. The at least one peripheral wall 32 define an enclosure. The inlet 32a and the outlet 32b is for ingress and egress of the coolant with respect to the enclosure 32. The connecting opening 34 is defined by the peripheral wall 32. The connection opening 34 receives and holds at least one corresponding the microchannel tube 10 to configure fluid communication between the enclosure and the microchannel tube 10. The mechanical connections for securely mounting the tank 30 over the tank holder 20 includes complementary snap engagement elements formed on the tank holder 20 and the tank 30 respectively. Particularly, the tank 30 includes a plurality of latching element 36 formed along the length thereof that are received in and engage with corresponding complementary loops and / or cavities 22 formed on the tank holder 20 to securely mount the tank 30 to the tank holder 20. In accordance with one embodiment, the loops and / or cavities 22 are formed on different planar surfaces of the tank holder 20 to receive the corresponding latching elements 36. In one embodiment, the two planar surfaces on which the loops and / or cavities 22 are formed are orthogonal with respect to each other. The loops and / or cavities 22 formed on a first planar surface of the tank holder 20 secures the tank 30 with respect to the tank holder 20 in a first direction whereas the loops and/ or cavities 22 formed on a second planer surface of the tank holder 20 secures the tank 30 with respect to the tank holder 20 in a second direction. Alternatively, the latching elements are formed on the tank holder 20 and are received in the corresponding complementary loops and /or cavities formed on the tank 30. However, the present invention is not limited to the configuration of the latching elements and the complementary loops and / or cavities, whether formed on the tank holder 20 or the tank 30, the number and placement of the latching elements 36 and the complementary loops as far as these ensure secure mounting of the tank 30 over the tank holder 20. In accordance with an embodiment of the present invention, the peripheral wall 32 extends beyond the connecting opening 34 to cover the extreme ends of the microchannel tubes 10, the portion 32a of the peripheral wall 32 extending beyond the connecting opening 34 is referred to as extension portion 32a. The extension portion further prevents any intrusion into the tank 30.

Also, provision is provided to configure sealing between the microchannel tube 10 and the corresponding tank 30. Generally, at least one sealing gasket 40 as illustrated in FIG. 10 is disposed between the microchannel tubes 10 and the tank 30 to ensure leak-proof and air tight connection between the microchannel tubes 10 and the tank 30, thereby preventing leakage of the coolant and ensuring efficient performance of the battery cooler. The sealing gasket 30 is secured to at least one of the microchannel tube 10 and the tank holder 20. The tank holder 20 is over-molded over the at least one extreme end of the microchannel tube 10. Although, the description and the drawings disclose and depict only one sealing gasket 40, however, multiple sealing gaskets 40 can be disposed between the microchannel tubes 10 and the tank 30 to ensure leak-proof and air tight connection between the microchannel tubes 10 and the tank 30. In accordance with an embodiment of the present invention, the sealing gasket 40 takes the form of the cavity configured on the tank holder 20 formed by over molding and is pinched in the middle as illustrated in FIG. 10. More specifically, the sealing gasket 40 is secured to extreme end of at least one of microchannel tube 10 by over-molding. The sealing gasket 40 is of resilient material, particularly, Ethylene Propylene Diene Monomer (EPDM) material and gets compressed as the tank 30 is securely mounted on the tank holder 20. At least one of the tank holder 20 and the sealing gasket 40 are disposed between the microchannel tube 10 and the tank 30. More specifically, at least one of the tank holder 20 and the sealing gasket 40 is coaxially received with respect to the microchannel tubes 10. The sealing gasket 40 is secured to at least one extreme end of at least one of microchannel tube 10 by at least one of press-fitting or over-molding. Preferably, the sealing gasket 40 is over-molded over the tank holder 20. Alternatively, the sealing gasket 40 is press fitted inside the groove 24 formed on the tank holder 20. Further, at least one of the sealing gasket 40 and the tank holder 20 includes retainer elements such as for example opening and notches to retain the sealing gasket 40 with respect to the tank holder 20 connected by over-molding or any other way. In a preferred embodiment, both the tank holder 20 and the sealing gasket 40 formed by over-molding are disposed between the microchannel tube 10 and the tank 30. In one embodiment of the present invention, the tank holder 20 includes at least one groove 24 formed thereon to receive and securely hold the sealing gasket 40 therein.

Generally, at least one of the microchannel tubes 10 is coated with powder coating of thermally conductive and electrically insulated material, except at the end portions thereof. The coating of thermally conductive but electrically insulated material permits heat transfer from the batteries "B" to the coolant flowing through the microchannel tubes 10 while sill preventing electric current from flowing from the batteries "B" to the coolant through the microchannel tubes 10, thereby ensuring safety and short circuiting. The tank holder 20 over-molded over the end portions of the microchannel tubes 10 covers the interface between portions 10b and 10c of the microchannel tube 10 without the powder coating and with powder coating respectively, thereby preventing any chances of short-circuiting due to any gaps.

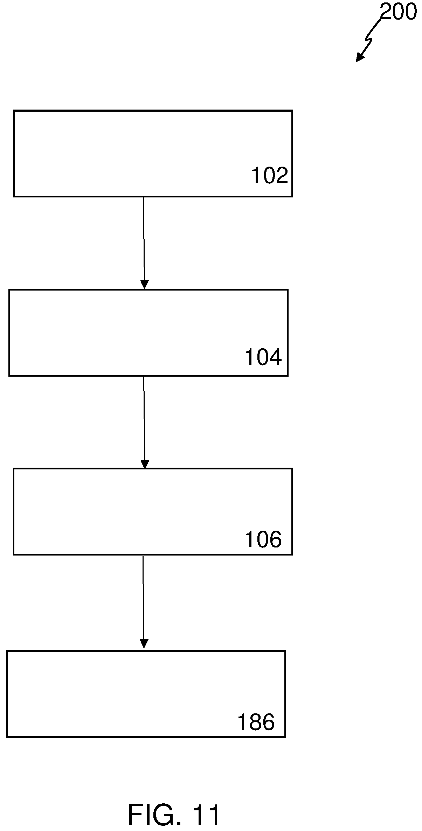

Also, is disclosed a method 200 of assembling a battery cooler 100 in accordance with an embodiment of the present invention. FIG. 11 illustrates a block diagram depicting the various steps of the method 200 for assembling the battery cooler 100, particularly, the method 200 involves over-moulding for forming and securely mounting a tank holder 20 to at least one extreme ends of the microchannel tube 10. Although, the various steps of the method 200 are depicted by blocks in the flow diagram and any number of steps described as method blocks can be combined in any order or can be performed in parallel to employ the method 200, or an alternative method. Additionally, individual blocks may be deleted from the flow chart depicting the method without departing from the scope and ambit of the present invention. The method 200 is to be understood with reference to the following description along with the FIG. 11.

The method 200 for assembling the battery cooler 100 includes the step 102 of powder coating at least a portion of at least one microchannel tube 10 with thermally conductive and electrically insulated material. Thereafter, the method 200 includes the step 104 of over-molding the tank holder 20 over at least one extreme end of the microchannel tube 10 such that the tank holder 20 covers interface between portions 10b and 10c of microchannel tube 10 without coating and with coating. The method 200 further includes the step 106 of securely mounting a sealing gasket 40 over at least one of tank holder 20 and the microchannel tube 10, wherein mounting includes over-molding of the sealing gasket 40 over at least one of tank holder 20 and the microchannel tube 10. Finally, the method includes the step 108 of securely mounting a tank 30 over the corresponding tank holder 20. The step 108 of securely mounting the tank 30 over the corresponding tank holder 20 involves snap engagement between the tank 30 and the tank holder 20 using latching elements 36 formed on the tank 30 and the corresponding complementary loops formed on the tank holder 20. Preferably, the sealing gasket 40 is over-molded over the extreme end of the microchannel tube 10. However, present invention is not limited to any particular way of securely mounting the sealing gasket 40 over the microchannel tube 10.

In any case, the invention cannot and should not be limited to the embodiments specifically described in this document, as other embodiments might exist. The invention shall spread to any equivalent means and any technically operating combination of means.

## Claims

1. A battery cooler (100) comprising:
• microchannel tubes (10) comprising respective multiple channels (10a) formed by extrusion;
• a tank holder (20) secured to the microchannel tube (10);
• a tank (30) securely mounted over the tank holder (20), wherein the tank (30) is secured to the tank-holder (20) by mechanical connections, and
• a sealing gasket (40) secured to at least one of the microchannel tube (10) and the tank holder (20),
**characterized in that** the tank holder (20) is over-molded over the at least one extreme end of the microchannel tube (10) and wherein the microchannel tubes (10) disposed adjacent to each other in a direction "Z" along a plane thereof are separated by a connection portion (14) formed with at least one opening (14a) to facilitate over-molding of the tank-holder (20) over the corresponding microchannel tube (10).

2. The battery cooler (100) as claimed in the previous claim, wherein the microchannel tubes (10) follows a wavy profile along length thereof, crests (10d) formed on microchannel tubes (10) disposed adjacent to one another along a first direction "X" orthogonal to the plane "P" of the microchannel tubes 10 are aligned and disposed opposite to one another define battery accommodating space to receive batteries "B" to be cooled.

3. The battery cooler (100) as claimed in any of the preceding claims, wherein at least a portion of the periphery of extreme ends of each microchannel tube (10) is formed with corrugations (12) to ensure gripping of the microchannel tube (10) by the tank-holder over-molded over the microchannel tube(10).

4. The battery cooler (100) as claimed in any of the preceding claims, wherein the tank (30) comprises:
o at least one peripheral wall (32) defining an enclosure;
o an inlet (32a) and an outlet (32b) for ingress and egress of a fluid with respect to the enclosure (32); and
o a connecting opening (34) defined by the peripheral wall (32) and adapted to receive and hold at least one corresponding microchannel tube (10) to configure fluid communication between the enclosure and the microchannel tube (10).

5. The battery cooler (100) as claimed in any of the preceding claims, wherein the at least one sealing gasket (40) is secured to extreme end of at least one of microchannel tube (10), by at least one of press-fitting and over-molding, preferably, over-molding.

6. The battery cooler (100) as claimed in any of the preceding claims, wherein at least the tank holder (20) and the sealing gasket (40) is coaxially received with respect to the microchannel tubes (10).

7. The battery cooler (100) as claimed in any of the preceding claims, wherein at least one of the tank holder (20) comprises at least one groove (24) formed thereon to receive and securely hold the sealing gasket (40) therein.

8. The battery cooler (100) as claimed in any of the preceding claims, wherein the mechanical connections comprises complementary snap engagement elements formed on the tank holder (20) and the tank (30) respectively.

9. The battery cooler (100) as claimed in any of the preceding claims, wherein at least one of the microchannel tubes (10) is coated with powder coating of thermally conductive and electrically insulated material, except at the end portions thereof.

10. The battery cooler (100) as claimed in previous claim, wherein the tank holder (20) covers the interface between portions (10b) and (10c) of the microchannel tube (10) without the powder coating and with the powder coating respectively.

11. The battery cooler (100) as claimed in the claim 4, wherein the peripheral wall (32) extends beyond the connecting opening (34) to cover the extreme ends of the microchannel tubes (10).

12. A method (200) for assembling a battery cooler (100 according to claim 1), the method (200) comprising
• step (102) of powder coating at least a portion of at least one microchannel tube (10) with thermally conductive and electrically insulated material;
• step (104) of over-molding a tank holder (20) over at least one extreme end of the microchannel tube (10) such that the tank holder (20) covers interface between portions (10b) and (10c) of microchannel tube (10) without coating and with coating respectively;
• step (106) of securely mounting or over-molding a sealing gasket (40) over at least one of tank holder (20) and the microchannel tube (10);
• step (108) of securely mounting a tank (30) over the corresponding tank holder (20) by means of snap engagement elements;

## Patentansprüche

1. Batteriekühler (100), Folgendes umfassend:
• Mikrokanalrohre (10), umfassend jeweils mehrere durch Strangpressen ausgebildete Kanäle (10a);
• eine Tankhalterung (20), die am Mikrokanalrohr (10) befestigt ist;
• einen Tank (30), der fest über der Tankhalterung (20) montiert ist, wobei der Tank (30) über mechanische Verbindungen an der Tankhalterung (20) befestigt ist und
• eine Dichtung (40), die am Mikrokanalrohr (10) und/oder an der Tankhalterung (20) befestigt ist,
**dadurch gekennzeichnet, dass** die Tankhalterung (20) auf dem mindestens einen äußersten Ende des Mikrokanalrohrs (10) aufgeformt ist und wobei die Mikrokanalrohre (10), die in eine Richtung "Z" entlang einer Ebene davon aneinander angrenzend angeordnet sind, durch einen Verbindungsabschnitt (14) getrennt sind, der mit mindestens einer Öffnung (14a) ausgebildet ist, um das Aufformen der Tankhalterung (20) auf das zugehörige Mikrokanalrohr (10) zu ermöglichen.

2. Batteriekühler (100) nach dem vorstehenden Anspruch, wobei die Mikrokanalrohre (10) einem Wellenprofil entlang deren Länge folgen, wobei an den Mikrokanalrohren (10) ausgebildete Kämme (10d), die entlang einer ersten Richtung "X" senkrecht zur Ebene "P" der Mikrokanalrohre 10 aneinander angrenzend angeordnet sind, aneinander ausgerichtet und einander entgegengesetzt angeordnet sind, um einen Batterieaufnahmeraum zur Aufnahme der zu kühlenden Batterien "B" zu definieren.

3. Batteriekühler (100) nach einem der vorstehenden Ansprüche, wobei zumindest ein Abschnitt des Umfangs der äußersten Enden jedes Mikrokanalrohrs (10) mit Riffeln (12) ausgebildet ist, um das Greifen des Mikrokanalrohrs (10) durch die auf das Mikrokanalrohr (10) aufgeformte Tankhalterung zu gewährleisten.

4. Batteriekühler (100) nach einem der vorstehenden Ansprüche, wobei der Tank (30) Folgendes umfasst:
o mindestens eine Umfangswand (32), die eine Einfassung definiert;
o einen Einlass (32a) und einen Auslass (32b) zum Eintreten und Austreten eines Fluids in Bezug zur Einfassung (32) und
o eine Verbindungsöffnung (34), die durch die Umfangswand (32) definiert und dazu eingerichtet ist, mindestens ein zugehöriges Mikrokanalrohr (10) aufzunehmen und zu halten, um die Fluidverbindung zwischen der Einfassung und dem Mikrokanalrohr (10) zu herzustellen.

5. Batteriekühler (100) nach einem der vorstehenden Ansprüche, wobei die mindestens eine Dichtung (40) am äußersten Ende mindestens eines der Mikrokanalrohre (10) mittels Presspassen und/oder Aufformen, vorzugsweise Aufformen, befestigt ist.

6. Batteriekühler (100) nach einem der vorstehenden Ansprüche, wobei zumindest die Tankhalterung (20) und die Dichtung (40) in Bezug zu den Mikrokanalrohren (10) koaxial aufgenommen sind.

7. Batteriekühler (100) nach einem der vorstehenden Ansprüche, wobei mindestens eine der Tankhalterungen (20) mindestens eine daran ausgebildete Nut (24) umfasst, um die Dichtung (40) darin aufzunehmen und festzuhalten.

8. Batteriekühler (100) nach einem der vorstehenden Ansprüche, wobei die mechanischen Verbindungen passende Rasteingriffselemente umfassen, die an der Tankhalterung (20) bzw. dem Tank (30) ausgebildet sind.

9. Batteriekühler (100) nach einem der vorstehenden Ansprüche, wobei mindestens eines der Mikrokanalrohre (10) außer an den Endabschnitten mit einer Pulverbeschichtung aus wärmeleitfähigem und elektrisch isoliertem Material beschichtet ist.

10. Batteriekühler (100) nach einem der vorstehenden Ansprüche, wobei die Tankhalterung (20) die Schnittstelle zwischen den Abschnitten (10b) und (10c) des Mikrokanalrohrs (10) ohne Pulverbeschichtung und mit Pulverbeschichtung abdeckt.

11. Batteriekühler (100) nach Anspruch 4, wobei sich die Umfangswand (32) über die Verbindungsöffnung (34) hinaus erstreckt, um die äußersten Enden der Mikrokanalrohre (10) abzudecken.

12. Verfahren (200) zur Montage eines Batteriekühlers (100) nach Anspruch 1, wobei das Verfahren (200) Folgendes umfasst:
• einen Schritt (102) des Pulverbeschichtens zumindest eines Abschnitts mindestens eines Mikrokanalrohrs (10) mit wärmeleitfähigem und elektrisch isoliertem Material;
• einen Schritt (104) des Aufformens einer Tankhalterung (20) auf mindestens ein äußerstes Ende des Mikrokanalrohrs (10), sodass die Tankhalterung (20) die Schnittstelle zwischen den Abschnitten (10b) und (10c) des Mikrokanalrohrs (10) mit Beschichtung und ohne Beschichtung abdeckt;
• einen Schritt (106) des festen Montierens oder Aufformens einer Dichtung (40) auf eine Tankhalterung (20) und/oder das Mikrokanalrohr (10);
• einen Schritt (108) des festen Montierens eines Tanks (30) an der zugehörigen Tankhalterung (20) mittels Rasteingriffselementen.

## Revendications

1. Refroidisseur de batterie (100) comprenant :
• des tubes à microcanal (10) comprenant de multiples canaux (10a) respectifs formés par extrusion ;
• un support de réservoir (20) fixé au tube à microcanal (10) ;
• un réservoir (30) monté de manière sûre sur le support de réservoir (20), le réservoir (30) étant fixé au support de réservoir (20) par des raccords mécaniques, et
• un joint d'étanchéité (40) fixé à au moins l'un du tube à microcanal (10) et du support de réservoir (20),
**caractérisé en ce que** le support de réservoir (20) est surmoulé sur l'au moins une extrémité terminale du tube à microcanal (10) et les tubes à microcanal (10) disposés de manière adjacente les uns aux autres dans une direction « Z » le long d'un plan de ceux-ci étant séparés par une partie de liaison (14) formée avec au moins une ouverture (14a) pour faciliter le surmoulage du support de réservoir (20) sur le tube à microcanal (10) correspondant.

2. Refroidisseur de batterie (100) selon la revendication précédente, les tubes à microcanal (10) suivant un profil ondulé sur leur longueur, les crêtes (10d) formées sur les tubes à microcanal (10) disposés de manière adjacente les uns aux autres le long d'une première direction « X » orthogonale au plan « P » des tubes à microcanal 10 étant alignées et disposées en vis-à-vis les unes des autres pour définir un espace de logement de batterie destiné à recevoir les batteries « B » à refroidir.

3. Refroidisseur de batterie (100) selon l'une quelconque des revendications précédentes, au moins une partie de la périphérie des extrémités terminales de chaque tube à microcanal (10) étant formée avec des ondulations (12) pour assurer la prise du tube à microcanal (10) par le support de réservoir surmoulé sur le tube à microcanal (10).

4. Refroidisseur de batterie (100) selon l'une quelconque des revendications précédentes, le réservoir (30) comprenant :
∘ au moins une paroi périphérique (32) définissant une enceinte ;
∘ une entrée (32a) et une sortie (32b) pour l'entrée et la sortie d'un fluide par rapport à l'enceinte (32) ; et
∘ une ouverture de raccordement (34) définie par la paroi périphérique (32) et conçue pour recevoir et maintenir au moins un tube à microcanal (10) correspondant afin de configurer une communication fluidique entre l'enceinte et le tube à microcanal (10).

5. Refroidisseur de batterie (100) selon l'une quelconque des revendications précédentes, l'au moins un joint d'étanchéité (40) étant fixé à l'extrémité terminale d'au moins un tube à microcanal (10), par au moins un ajustement pressé et un surmoulage, de préférence un surmoulage.

6. Refroidisseur de batterie (100) selon l'une quelconque des revendications précédentes, au moins le support de réservoir (20) et le joint d'étanchéité (40) étant reçus coaxialement par rapport aux tubes à microcanal (10).

7. Refroidisseur de batterie (100) selon l'une quelconque des revendications précédentes, au moins un support de réservoir (20) comprenant au moins une rainure (24) formée sur celui-ci pour recevoir et maintenir de manière sûre le joint d'étanchéité (40) en son sein.

8. Refroidisseur de batterie (100) selon l'une quelconque des revendications précédentes, les liaisons mécaniques comprenant des éléments de mise en prise par encliquetage complémentaires formés respectivement sur le support de réservoir (20) et le réservoir (30).

9. Refroidisseur de batterie (100) selon l'une quelconque des revendications précédentes, au moins l'un des tubes à microcanal (10) étant recouvert d'un revêtement en poudre constitué d'un matériau thermiquement conducteur et électriquement isolant, sauf au niveau de ses parties d'extrémité.

10. Refroidisseur de batterie (100) selon la revendication précédente, le support de réservoir (20) recouvrant l'interface entre les parties (10b) et (10c) du tube à microcanal (10) sans le revêtement en poudre et avec le revêtement en poudre, respectivement.

11. Refroidisseur de batterie (100) selon la revendication 4, la paroi périphérique (32) s'étendant au-delà de l'ouverture de liaison (34) pour recouvrir les extrémités terminales des tubes à microcanal (10).

12. Procédé (200) pour assembler un refroidisseur de batterie (100) selon la revendication 1, le procédé (200) comprenant
• l'étape (102) consistant à revêtir de poudre au moins une partie d'au moins un tube à microcanal (10) avec un matériau thermiquement conducteur et électriquement isolant ;
• l'étape (104) consistant à surmouler un support de réservoir (20) sur au moins une extrémité terminale du tube à microcanal (10) de sorte que le support de réservoir (20) recouvre l'interface entre les parties (10b) et (10c) du tube à microcanal (10) sans revêtement et avec revêtement, respectivement ;
• l'étape (106) consistant à fixer de manière sûre ou à surmouler un joint d'étanchéité (40) sur au moins l'un du support de réservoir (20) et du tube à microcanal (10) ;
• l'étape (108) consistant à fixer de manière sûre un réservoir (30) sur le support de réservoir (20) correspondant à l'aide d'éléments de mise en prise par encliquetage.
